(19) **Europäisches Patentamt / European Patent Office / Office européen des brevets**

(11) **EP 2 304 963 B1**

(12) **FASCICULE DE BREVET EUROPEEN**

(45) Date de publication et mention de la délivrance du brevet:
**11.11.2015 Bulletin 2015/46**

(21) Numéro de dépôt: **09772727.5**

(22) Date de dépôt: **26.06.2009**

(51) Int Cl.:
*H04N 19/105* (2014.01)   *H04N 19/176* (2014.01)
*H04N 19/11* (2014.01)   *H04N 19/61* (2014.01)
*H04N 19/593* (2014.01)

(86) Numéro de dépôt international:
**PCT/FR2009/051229**

(87) Numéro de publication internationale:
**WO 2010/001045 (07.01.2010 Gazette 2010/01)**

(54) **PROCEDE ET DISPOSITIF DE CODAGE D'IMAGES METTANT EN OEUVRE UNE PREDICTION AMELIOREE, PROCEDE ET DISPOSITIF DE DECODAGE, SIGNAL ET PROGRAMMES D'ORDINATEUR CORRESPONDANTS**

VERFAHREN UND EINRICHTUNG ZUM CODIEREN VON BILDERN UNTER VERWENDUNG VERBESSERTER PRÄDIKTION UND ENTSPRECHENDES DECODIERUNGSVERFAHREN UND EINRICHTUNG, SIGNAL UND COMPUTERSOFTWARE

METHOD AND DEVICE FOR ENCODING IMAGES USING IMPROVED PREDICTION, AND CORRESPONDING DECODING METHOD AND DEVICE, SIGNAL AND COMPUTER SOFTWARE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **01.07.2008 FR 0854467**

(43) Date de publication de la demande:
**06.04.2011 Bulletin 2011/14**

(73) Titulaire: **Orange**
**75015 Paris (FR)**

(72) Inventeurs:
• **CAMMAS, Nathalie**
**F-35490 Sens De Bretagne (FR)**
• **AMONOU, Isabelle**
**F-35235 Cesson-Sevigne (FR)**
• **KERVADEC, Sylvain**
**F-35490 Sens De Bretagne (FR)**

• **PATEUX, Stéphane**
**F-35700 Rennes (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A-01/49038**       **US-A1- 2006 067 399**
**US-A1- 2006 093 041**

• **TAICHIRO SHIODERA ET AL: "Block Based Extra/Inter-Polating Prediction for Intra Coding" IMAGE PROCESSING, 2007. ICIP 2007. IEEE INTERNATIONAL CONFERENCE ON, IEEE, PI, 1 septembre 2007 (2007-09-01), pages VI-445, XP031158358 ISBN: 978-1-4244-1436-9**

**Description**

**1. Domaine de l'invention**

Le domaine de l'invention est celui du codage et du décodage d'un flux vidéo, constitué d'une série d'images successives. Plus précisément, l'invention s'applique à la compression d'images ou de séquences vidéo utilisant des transformées par bloc.

Ainsi, l'invention concerne les techniques de prédiction mises en oeuvre pour coder et décoder un bloc d'images.

L'invention peut notamment s'appliquer aux codages vidéo qui seront mis en oeuvre dans les futurs standards de compression vidéo.

**2. Art antérieur**

On connaît déjà de nombreuses techniques de compression de données vidéo. Parmi celles-ci, de nombreuses techniques de codages vidéo, et par exemple celles mettant en oeuvre les standards de compression vidéo issus de l'organisation MPEG (MPEG-1, MPEG-2, MPEG-4 part 2, ...) ou de l' ITU-T (H.261, ..., H.264/AVC), utilisent une représentation par bloc de la séquence vidéo. Ainsi, selon la technique H.264, chaque image peut être découpée en tranches (« slices » en anglais), qui sont ensuite subdivisées en macroblocs. Chaque macrobloc est ensuite découpé en blocs. Un bloc est constitué d'un ensemble de pixels.

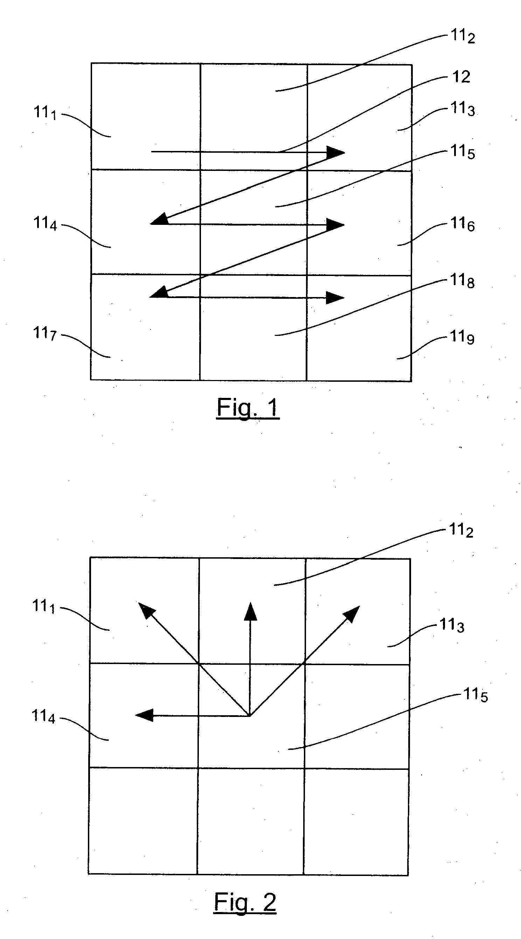

Un exemple de tranche formée de neuf macroblocs $11_1$ à $11_9$ est illustré schématiquement en figure 1. Lors du codage et du décodage, les tranches sont parcourues, macrobloc par macrobloc, selon un chemin 12 défini de manière systématique, ou précisées par des éléments descriptifs prévus à cet effet, présents dans le flux.

L'approche est généralement la même pour les blocs constitutifs d'un macroblocs. Un macrobloc peut notamment être formé de 4 x 4 ou 16 x 16 blocs. Selon les techniques connues, ces macroblocs et blocs sont codés par prédiction intra-images ou inter-images.

Par la suite, on considère des groupes de blocs. le terme « groupe » peut correspondre notamment à une image ou une tranche, constituée d'un ensemble de macroblocs, ou à un macrobloc, c'est-à-dire un ensemble de blocs. Le terme « bloc » s'applique alors respectivement à un macrobloc ou a un bloc selon la terminologie de la norme H.264.

Selon la technique H.264, un bloc peut-être codé par :

- une prédiction temporelle, c'est-à-dire en référence à un bloc de référence appartenant à une ou plusieurs autres images ; et/ou
- une prédiction dite « spatiale », en fonction des blocs voisins de l'image courante.

Dans ce dernier cas, la prédiction ne peut être effectuée qu'à partir des blocs qui ont été précédemment codés.

Ainsi, dans l'exemple de la figure 2, et en considérant le parcours 12 de la figure 1, le bloc $11_5$ ne peut être prédit qu'en fonction des blocs précédents $11_1$ à $11_4$. Les blocs suivants $11_6$ à $11_9$ qui n'ont pas été codés ne peuvent pas être pris en compte.

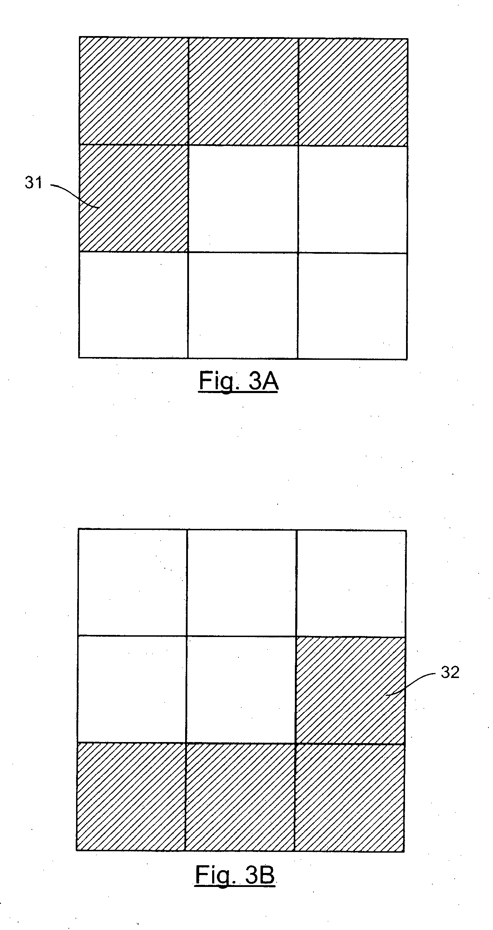

Comme illustré par les figures 3A et 3B, on peut distinguer sur un groupe de blocs deux zones 31 et 32, généralement appelées respectivement zone causale 31 et zone anti-causale 32. La zone causale d'un groupe de blocs est la zone de l'image comprenant les blocs situés avant le bloc courant, selon le sens de parcours des blocs dans l'image.

Dans le codeur H.264, le sens de parcours des blocs dans l'image correspond aussi au sens de parcours de codage et de décodage des blocs, ainsi qu'au sens de parcours d'écriture et de lecture des données codées des blocs dans le flux. Par la suite, on appelle zone causale, la zone correspondant aux blocs situés avant le bloc courant dans le sens de parcours d'écriture ou de lecture des blocs dans le flux. La zone anti-causale est la zone de l'image comprenant les blocs situés après le bloc courant selon le sens de parcours d'écriture ou de lecture des blocs dans le flux.

Les techniques de codage connues, et notamment les codeurs H.264, n'utilisent, pour la prédiction d'un bloc courant, que les blocs de la zone causale, puisque les blocs de la zone anti-causale ne sont pas encore codés, ou décodés, et donc non disponibles pour la prédiction.

Plusieurs types de parcours ont été définis, tels que celui illustré par la figure 1, généralement connu sous le terme « Raster Scan », ou le parcours en spirale (« Spiral Scan ») qui propose de parcourir un groupe de blocs à partir de son centre, en progressant vers les bords par un parcours en forme de spirale.

Dans la norme H.264/AVC, on a défini différents motifs pour chaque tranche. Cependant, de même que pour les techniques précédentes, le parcours dans chaque tranche est prédéfini, et conduit à distinguer des blocs utilisables pour la prédiction (zone causale) et des blocs non utilisables (zone anti-causale).

Les prédictions associées à un bloc peuvent être de divers types.

Ainsi, dans la norme de codage H.264/AVC, on propose une prédiction de la texture, selon neuf directions de prédiction possibles, dans le cas de blocs de taille 4 x 4. Pour chaque pixel de bloc, la prédiction est obtenue en prolongeant la dernière ligne ou colonne du bloc de référence, dans une combinaison de pixels de la dernière ligne et/ou colonne.

On propose également, dans cette technique de codage, une prédiction de mouvement. Les blocs de référence utilisés dans la prédiction inter, ou prédiction temporelle, sont identifiés à l'aide de vecteurs de mouvement, codés dans le flux en utilisant une prédiction par des vecteurs de blocs du voisinage causal et temporel. Par exemple, un vecteur d'un bloc à coder peut être prédit en calculant le vecteur médian à partir d'un vecteur des blocs haut, haut gauche, et gauche du bloc à coder.

On prévoit encore une prédiction dite "intra déplacée", utilisant les blocs déjà reconstruits de l'image comme base de prédiction d'un bloc à coder. Un bloc de référence le plus proche du bloc à coder est recherché dans la partie de l'image à coder déjà reconstruite. La différence entre les valeurs des pixels du bloc de référence cible et du bloc à coder est minimisée, et le bloc de référence cible est identifié dans le décodeur grâce au codage d'un vecteur de mouvement intra-image, indiquant le déplacement par rapport au bloc à coder pour retrouver le bloc de référence.

### 3. Inconvénient des techniques antérieures

Un inconvénient de ces différentes techniques de prédiction, qui repose sur l'utilisation d'un parcours d'écriture, et de lecture, des blocs dans le flux ou signal produit, est que les références de prédiction possibles sont limitées à la zone causale. En effet, dans certaines situations, il serait plus efficace, pour des raisons de similitude entre les blocs par exemple, d'utiliser comme base de prédiction un bloc présent dans la zone anti-causale.

Ceci n'est cependant pas possible, selon l'art antérieur, puisque les blocs de la zone anti-causale n'ont pas encore été traités, et ne sont donc pas disponibles pour la prédiction.

Il est à noter que, pour l'homme du métier, cette situation est incontournable, comme le montre la terminologie « zone anti-causale », et non comme un inconvénient susceptible d'être corrigé.

Le document WO 01/49038 décrit toutefois une technique de codage d'images découpées en blocs, mettant en oeuvre une prédiction à partir d'un bloc présent dans la zone anti-causale.

Cependant le document WO 01/49038, impose pour ce faire, de modifier l'ordre d'écriture des blocs pour qu'il coïncide avec l'ordre de décodage ce qui accroît en conséquence la complexité de codage.

### 4. Exposé de l'invention

L'invention propose une solution nouvelle qui ne présente pas cet inconvénient, sous la forme d'un procédé de codage de données d'images, une image étant découpée en blocs, ledit procédé mettant en oeuvre les étapes de :

- prédiction des données d'un bloc courant en fonction d'au moins un autre bloc déjà codés, dit bloc de référence, délivrant un bloc prédit ;
- détermination d'informations de résidus, par comparaison dudit bloc courant et dudit bloc prédit ;
- codage desdites informations de résidus ;

- transmission et/ou stockage d'un signal de données comprenant un ensemble de données associées à chaque bloc, comprenant lesdites informations de résidus, selon un ordre prédéterminé de parcours d'écriture des données associées aux blocs codés dans ledit signal.

Selon l'invention, ladite étape de prédiction tient compte d'un ensemble de blocs codés voisins dudit bloc courant, comprenant des blocs non encore considérés selon ledit ordre de parcours d'écriture, et le procédé de codage comprend les étapes de :

- construction d'un arbre de dépendance, associant à un bloc courant au moins un bloc de référence à partir duquel le bloc prédit associé audit bloc courant a été prédéterminé ;
- insertion d'informations représentatives dudit arbre de dépendance dans ledit ensemble de données associées à chaque bloc.

De cette façon, le décodage d'une image peut se faire selon un ordre de décodage fonction dudit arbre, et non impérativement selon l'ordre de parcours d'écriture.

Ainsi, l'invention repose sur une approche différente des techniques de l'art antérieur, qui utilisent le même sens de parcours des blocs dans l'image pour le codage et le décodage que le sens de parcours d'écriture/lecture des blocs dans le flux. Au contraire, l'invention distingue le parcours de codage et le parcours d'écriture, et permet de choisir un parcours de codage plus efficace, alors que le parcours d'écriture reste inchangé. L'invention permet donc, lorsque ceci est souhaitable, de prendre en compte des blocs de référence habituellement ignorés, car appartenant à la zone anti-causale.

Comme expliqué par la suite, des parcours distincts sont également utilisés au décodage. Le parcours de lecture correspond au parcours d'écriture. En revanche, le parcours de codage peut être distinct du parcours de décodage (plusieurs parcours de décodage peuvent être possibles). Le parcours de décodage sera déterminé, lors du décodage, à l'aide de l'arbre de dépendance construit lors du codage.

Selon un mode de réalisation de l'invention, ladite étape de prédiction comprend au moins deux passes de prédiction, selon des ordres de parcours de prédiction distincts, et le procédé de codage comprend une étape de sélection de l'un desdits ordres de parcours de prédiction, selon un critère d'efficacité prédéterminé.

En d'autres termes, plusieurs parcours de codage sont testés, et l'on retient le plus efficace. En revanche, le parcours, ou ordre, d'écriture reste inchangé, et est donc indépendant du parcours, ou ordre, de codage sélectionné.

Ledit critère d'efficacité peut notamment tenir compte du débit nécessaire pour le codage desdits blocs et d'une information représentative de la distorsion.

L'invention concerne également un dispositif de codage de données d'images mettant en oeuvre le procédé de codage décrit ci-dessus. Un tel dispositif comprend notamment :

- des moyens de prédiction des données d'un bloc courant en fonction d'au moins un autre bloc déjà codé, dit bloc de référence, délivrant un bloc prédit ;
- des moyens de détermination d'informations de résidus, par comparaison dudit bloc courant et dudit bloc prédit ;
- des moyens de codage desdites informations de résidus,
- des moyens de transmission et/ou stockage d'un signal de données comprenant un ensemble de données associées à chaque bloc, comprenant lesdites informations de résidus, selon un ordre prédéterminé de parcours d'écriture des données associées aux blocs codés dans ledit signal.

Selon l'invention, lesdits moyens de prédiction tiennent compte d'un ensemble de blocs codés voisins dudit bloc courant, comprenant des blocs non encore considérés selon ledit ordre de parcours d'écriture, et ledit dispositif comprend :

- des moyens de construction d'un arbre de dépendance, associant à un bloc courant au moins un bloc de référence à partir duquel le bloc prédit associé audit bloc courant a été prédéterminé ;
- des moyens d'insertion d'informations représentatives dudit arbre de dépendance dans ledit ensemble de données associées à chaque bloc.

L'invention concerne encore un produit programme d'ordinateur téléchargeable depuis un réseau de communication et/ou stocké sur un support lisible par ordinateur et/ou exécutable par un microprocesseur, caractérisé en ce qu'il comprend des instructions de code de programme pour l'exécution des étapes du procédé de codage décrit ci-dessus, lorsqu'il est exécuté sur un ordinateur.

L'invention concerne également un signal de données d'images codé selon ce procédé de codage, selon lequel, une image étant découpée en blocs, on met en oeuvre au moins une passe de prédiction, et comprenant, pour un bloc courant, un ensemble de données comprenant :

- des données représentatives d'un arbre de dépendance, associant audit bloc courant au moins un bloc de référence à partir duquel le bloc prédit associé audit bloc courant a été prédéterminé ;
- des informations de résidus, correspondant à une différence entre ledit bloc courant et le bloc prédit correspondant.

Ainsi, le signal selon l'invention contient des informations, sous la forme d'un arbre de dépendance, qui permettront aux décodeurs de déterminer leur parcours de décodage (qui pourra, selon les cas, être distinct du parcours de lecture et/ou du parcours de codage).

Selon un mode de réalisation particulier de l'invention, lesdites données représentatives d'un arbre de dépendance comprennent une information précisant le nombre de blocs de référence pris en compte pour ledit bloc courant et, pour chaque bloc de référence, des données de définition d'un vecteur reliant ledit bloc de référence et ledit bloc courant.

L'invention concerne encore un support de données comprenant au moins un signal de données d'images tel que décrit ci-dessus.

L'invention concerne par ailleurs un procédé de décodage d'un signal codé selon le procédé de codage décrit ci-dessus.

Selon l'invention, pour au moins un desdits blocs, le décodage est effectué selon un ordre de décodage distinct dudit ordre de parcours d'écriture, et le procédé comprend les étapes suivantes, pour un bloc courant :

- extraction, dans ledit ensemble de données, d'informations représentatives d'un arbre de dépendance, associant à un bloc courant au moins un bloc de référence à partir duquel le bloc prédit associé audit bloc courant a été prédéterminé ;
- décodage dudit bloc, lorsque le ou les blocs de référence identifiés dans ledit arbre de dépendance ont déjà été décodés, comprenant les sous-étapes suivantes :

  - prédiction d'un bloc prédit, à partir du ou desdits blocs de référence ;
  - reconstruction d'un bloc décodé, à partir dudit bloc prédit et en fonction d'informations de résidus présentes dans ledit ensemble de données.

Ainsi, selon l'invention, le décodage n'est pas effectué selon le parcours de lecture des blocs, mais selon un parcours de décodage distinct, qui tient compte de l'arbre de dépendance. En effet, l'analyse de cet arbre permet de déterminer si un bloc courant peut être décodé à un instant donné (en fonction des blocs déjà lus selon l'ordre de parcours et déjà décodés) ou s'il faut attendre le décodage d'un (ou plusieurs) bloc de référence qui n'a pas encore été décodé.

Selon un mode de réalisation particulier, le procédé de décodage comprend les étapes suivantes, pour un bloc courant :

- si le ou les blocs de référence identifiés dans ledit arbre de dépendance ont déjà été décodés, décodage immédiat dudit bloc courant :
- sinon, insertion de l'ensemble de données dudit bloc courant dans une pile d'attente :
- traitement du bloc suivant, selon ledit ordre de parcours d'écriture.

Selon une première approche particulière, le procédé de décodage peut comprendre une étape de mémorisation des blocs de référence nécessaires pour décoder un bloc en attente, et en ce que ledit bloc en attente est décodé dès que tous lesdits blocs de référence nécessaires sont disponibles.

Selon une autre approche particulière, le décodage peut être effectué par passes successives selon ledit ordre de parcours d'écriture, un bloc courant étant décodé au cours d'une desdites passes si tous lesdits blocs de référence nécessaires sont disponibles.

Comme on peut le constater, l'ordre de parcours de décodage peut varier, selon les mises en oeuvre. On peut notamment tenter de décoder un bloc dès que cela est possible (première approche) ou effectuer des passes successives, et ne décoder à chaque passe que les blocs pour lesquels cela est possible (deuxième approche).

De nombreuses adaptations et options sont envisageables pour la prédiction, au codage et au décodage. Ainsi, on peut prévoir que, pour au moins un bloc courant, ladite sous-étape de prédiction tient compte d'au moins deux blocs de référence, une valeur de pondération étant affectée à chacun desdits blocs de référence.

Il est également possible de prévoir que, pour au moins un bloc courant, ladite sous-étape de prédiction tient compte d'au moins un bloc de référence chevauchant au moins deux blocs source.

L'invention concerne également un produit programme d'ordinateur téléchargeable depuis un réseau de communication et/ou stocké sur un support lisible par ordinateur et/ou exécutable par un microprocesseur, caractérisé en ce qu'il comprend des instructions de code de programme pour l'exécution des étapes du procédé de décodage décrit ci-dessus, lorsqu'il est exécuté sur un ordinateur.

L'invention concerne enfin un dispositif de décodage d'un signal codé selon le procédé de codage décrit ci-dessus, et mettant en oeuvre des moyens de décodage assurant, pour au moins un desdits blocs, un décodage selon un ordre de décodage distinct dudit ordre de parcours d'écriture. Ce dispositif de décodage comprend également, pour le décodage d'un bloc courant :

- des moyens d'extraction, dans ledit ensemble de données, d'informations représentatives d'un arbre de dépendance, associant à un bloc courant au moins un bloc de référence à partir duquel le bloc prédit associé audit bloc courant a été prédéterminé ;
- des moyens de décodage dudit bloc, en fonction d'informations de résidus présentes dans ledit ensemble de données, lorsque le ou les blocs de référence identifiés dans ledit arbre de dépendance ont déjà été décodés.

## 5. Liste des figures

D'autres caractéristiques et avantages de l'invention apparaîtront plus clairement à la lecture de la description suivante d'un mode de réalisation, donné à titre de simple exemples illustratifs et non limitatifs, et des dessins annexés parmi lesquels :

- la figure 1, déjà commentée et en préambule, illustre un exemple de groupe de blocs, et un ordre de parcours correspondant ;
- la figure 2 présente les blocs utilisables pour une prédiction spatiale dans le cas du groupe de bloc de la figure 1 ;
- les figures 3A et 3B illustrent respectivement les zones causales et anti-causales, pour l'exemple de la figure 2 ;
- la figure 4 illustre le principe de l'invention, par comparaison à la figure 2 ;
- la figure 5 présente les pixels utilisés pour la prédiction spatiale intra selon l'invention, dans le cas d'un bloc 4 x 4 ;
- la figure 6 illustre un exemple de structure de signal selon l'invention dans le cas d'un bloc codé en mode inter ;
- la figure 7 présente un exemple de prédiction tenant compte de plusieurs, en l'occurrence, blocs de référence ;
- la figure 8 illustre un exemple de syntaxe de codage selon l'invention, pour une image intra-codée en mode intra-déplacée ;
- La figure 9 présente un exemple de syntaxe dans le cas du codage d'un bloc inter ;
- La figure 10 est un exemple d'arbre de dépendances pour le décodage des blocs d'un groupe de blocs ;
- La figure 11 est un schéma synoptique illustrant un exemple de codage selon l'invention ;
- La figure 12 présente un schéma synoptique d'un premier mode de réalisation du décodage selon l'invention ;
- La figure 13 est un schéma synoptique d'un second mode de réalisation d'un décodage selon l'invention ;
- La figure 14 présente de façon plus détaillée le décodage des blocs en attente du procédé de la figure 13.

*6.1 rappel des principes de l'invention*

L'invention propose donc une technique permettant d'enrichir les possibilités de prédiction spatiale pour un bloc donné. Ces prédictions sont applicables à l'information de texture d'un bloc aussi bien qu'à l'information de mouvement.

Parmi les étapes du processus de compression d'une image, on distingue selon l'invention deux phases particulières. L'une est la phase d'encodage, qui consiste à effectuer différents traitements et transformations sur un bloc de l'image à coder (estimation/compensation de mouvement, transformation DCT, quantification...), et l'autre est une phase d'écriture, qui consiste à produire la syntaxe associée au bloc de l'image, et à l'écrire dans le flux représentant l'image compressée. Selon l'invention, l'ordre de codage des blocs diffère (au moins pour certains blocs) de l'ordre de parcours des blocs dans l'image. En revanche, l'ordre d'écriture des blocs codés dans le flux n'est pas modifié.

Les phases correspondantes du processus de décompression d'une image sont respectivement une phase de décodage (compensation de mouvement, transformation DCT inverse, quantification inverse, reconstruction...), et une phase de lecture de la syntaxe ("parsing" en anglais).

Selon l'invention, l'ordre de parcours (également appelé « ordre » par simplification) d'écriture, et de lecture, peut être distinct de l'ordre de codage, ou de décodage.

Le bloc à coder, ou bloc courant, peut ainsi, selon l'invention, utiliser comme référence de prédiction des blocs situés dans la zone causale et dans la zone anti-causale du bloc courant. On peut en outre utiliser plusieurs blocs voisins (temporellement et/ou spatialement) comme référence de prédiction, et mettre en oeuvre une somme pondérée.

Pour cela, l'invention propose de modifier, au moins pour certains blocs, l'ordre de décodage des blocs par rapport à l'ordre de lecture des blocs dans le flux (ou signal), ou à l'ordre de parcours des blocs dans la tranche d'image.

On rappelle que l'invention peut s'appliquer aussi bien aux blocs qu'aux macroblocs au sens de la norme H.264/AVC. Le terme « bloc » dans la description doit donc s'interpréter comme signifiant « macrobloc » ou « bloc » au sens de cette norme, sauf lorsqu'il est précisé le contraire. Ainsi, l'exemple donné ci-après concerne des macroblocs.

Dans un mode de réalisation, les macroblocs sont ainsi décodés en suivant un ordre de décodage particulier, défini de manière récursive à partir de l'information de prédiction utilisée par les macroblocs. On définit, pour permettre ce décodage, un arbre de dépendances des macroblocs entre eux. Le décodage commence par les macroblocs situés sur les feuilles de l'arbre et en remontant vers les racines. Dans ce mode de réalisation, l'ordre de décodage est modifié par rapport à l'ordre de lecture, qui reste l'ordre de parcours classique des blocs dans l'image.

Cette technique offre plusieurs avantages, et notamment :

- une amélioration de la compression du flux ;
- une hausse de complexité limitée au décodeur ;
- une hausse de complexité contrôlable à l'encodeur.

Elle introduit une légère hausse de complexité à l'encodeur, car il est préférable d'effectuer plusieurs passes sur l'image pour une efficacité maximale. Cette hausse de complexité peut cependant être maîtrisée par des heuristiques adéquates.

La définition et la construction d'un arbre supposent également des traitements supplémentaires. Cependant, le nombre de dépendances dans l'arbre peut être contraint afin de contrôler la complexité.

Les parcours de lecture et de décodage sont identiques dans tous les standards de compression vidéo. Ceci a pour avantage de pouvoir lire la syntaxe associée à un bloc, puis de décoder ce bloc immédiatement. La lecture et le décodage peuvent cependant être effectués successivement, c'est-à-dire que le décodage peut commencer une fois tous les blocs lus. Selon l'invention, l'ordre de lecture des blocs codés n'est pas modifié et est identique à l'ordre d'écriture des blocs dans l'image. L'ordre de décodage est en revanche modifié et est lié au mode de prédiction de chaque bloc.

Dans le mode de réalisation décrit par la suite en détail, pour coder ou décoder un bloc, ou un macrobloc, un contexte de codage/décodage est positionné. Ce contexte indique quels sont les blocs pouvant être utilisés pour construire la prédiction pour le codage/décodage du bloc courant. Ces blocs sont appelés blocs de référence possibles par la suite. Les blocs de référence possibles sont des blocs précédemment codés/décodés et reconstruits.

Les blocs de référence peuvent cependant être situés dans la zone causale ou dans la zone anti-causale du bloc à coder/décoder, ces zones étant définies selon le sens de parcours des blocs dans l'image ou le sens de lecture/écriture des blocs dans le flux.

On propose au paragraphe suivant une liste non exhaustive des types de prédiction auxquels l'algorithme s'applique. D'autres types de prédiction sont bien sûr utilisables.

L'algorithme de codage et décodage est le même pour tous les types de prédiction utilisés, une fois le contexte de codage/décodage du bloc positionné.

Le mode de réalisation décrit ci-après se place dans un contexte de codage correspondant à celui utilisé dans les codeurs H.264/AVC, ou les futurs codeurs H265.

## 6.2 Exemples de types de prédiction

Un bloc courant utilise un ou plusieurs blocs de référence pour établir une prédiction. La différence, ou résidu, entre le bloc courant et la prédiction, c'est-à-dire le bloc prédit, est alors codée et transmise (et/ou stockée, selon les applications). Au décodage, la différence reçue est ajoutée à la prédiction pour reconstruire le bloc.

### 6.2.1 prédiction de la texture

L'invention propose d'étendre, selon cette application, la prédiction de la texture utilisée dans les codeurs H.264/AVC. En effet, l'utilisation de la zone anti-causale d'un bloc permet d'ajouter les blocs suivants pour construire la prédiction d'un bloc à coder : bloc droit, bloc bas droit, bloc bas et bloc bas gauche.

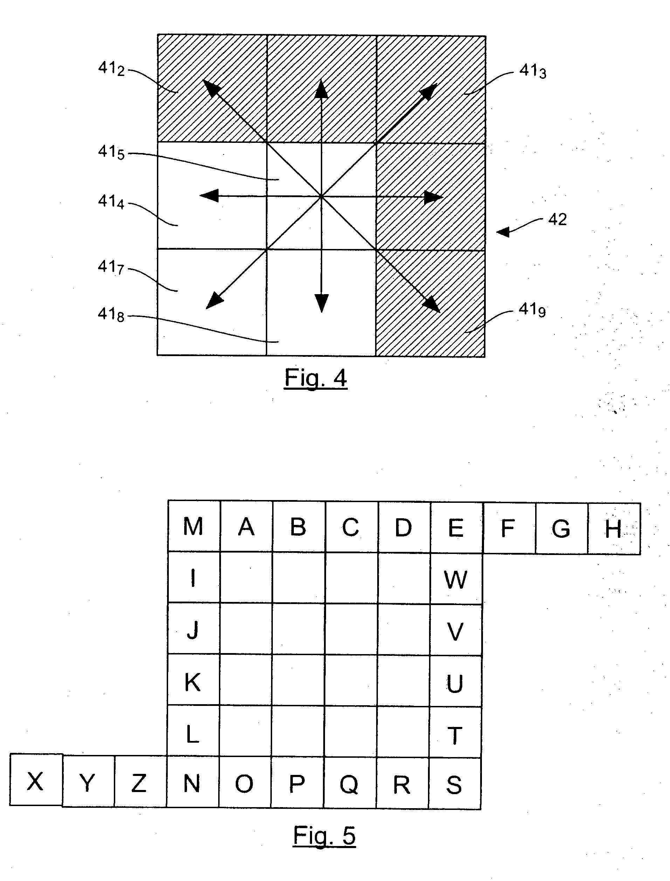

La figure 4 illustre tous les blocs de référence possibles $41_1$ à $41_4$ et $41_6$ à $41_9$ pouvant être utilisés pour une prédiction spatiale d'un bloc $41_5$ selon l'approche de l'invention.

Afin de coder chaque bloc courant $41_5$ en boucle fermée, c'est-à-dire à partir de blocs codés/décodés, pour une meilleure efficacité en compression et afin d'éviter les phénomènes de dérive entre le codeur et le décodeur, il est nécessaire de n'autoriser que les prédictions n'utilisant que des blocs déjà codés (zone grisée 43 dans l'exemple de la figure 4). Les prédictions possibles pour le bloc central $41_5$ sont des prédictions utilisant des blocs de référence possibles situés dans la zone causale ($41_1$, $41_2$, $41_3$) et dans la zone anti-causale ($41_6$, $41_9$) du bloc à coder.

Le bloc $41_5$ dispose en outre, bien sûr, des prédictions temporelles déjà possibles dans le codeur H.264/AVC.

La figure 5 illustre les pixels utilisés pour une prédiction spatiale intra. Outre les types de prédiction connus (pixels A à M), correspondant à la zone causale, et définis dans la norme H.264/AVC, l'approche de l'invention permet de proposer les types de prédiction utilisant les nouveaux pixels situés dans la zone anti-causale (pixels N à Z). Ceux-ci sont obtenus en inversant les directions de prédiction existant dans le codeur H.264/AVC.

Pour chaque pixel du bloc, la prédiction est obtenue en prolongeant la première ligne ou colonne du bloc de référence (mode 0 ou 1, selon la terminologie de la norme H.264/AVC) ou par une combinaison des pixels de la première ligne et/ou colonne (modes 2 à 8).

La signalisation des nouveaux modes introduits peut se faire par exemple :

- soit par l'introduction d'un drapeau supplémentaire pour chaque bloc. Le type de prédiction est déjà présent dans la syntaxe du codeur H.264/AVC pour chaque bloc. Sa valeur associée à la valeur du drapeau indiquerait le sens du type de prédiction. Une valeur 0 indiquerait les directions du codeur H.264/AVC, une valeur 1 indiquant les nouvelles directions ;
- soit par l'introduction de nouveaux types de prédiction. Le type de prédiction est déjà présent dans la syntaxe du codeur H.264/AVC pour chaque bloc. L'élément de syntaxe le représentant prendrait alors des valeurs allant de 0 à 17, 0 à 8 étant les types de prédictions du codeur H.264/AVC, et 9 à 17 étant les nouveaux types de prédictions.

De manière similaire, il est possible d'ajouter des types de prédiction utilisant des pixels de la première ligne du bloc bas et de la dernière ligne du bloc haut ou encore en utilisant des pixels de la première colonne du bloc droit et de la dernière colonne du bloc gauche. Ces types de prédiction sont ajoutés en codant un indicateur supplémentaire ou en définissant des valeurs de types de prédiction supplémentaires.

L'approche décrite ci-dessus s'applique aux blocs de taille 4x4. Une extension similaire peut bien sûr être faite pour d'autres types de blocs, et par exemple les blocs de taille 16x16.

Le codage de l'élément de syntaxe des types de prédiction peut prendre en compte le contexte des blocs voisins du bloc à coder afin d'optimiser le codage de l'élément de syntaxe par exemple. Si des blocs voisins du bloc à coder ne sont pas encore codés, ces blocs ne pourront être utilisés pour prédire le bloc à coder, certaines directions de prédiction sont alors impossibles.

6.2.2 prédiction du mouvement

L'approche de l'invention permet également d'étendre la prédiction du mouvement, par rapport à la technique H.264/AVC. L'utilisation de la zone anti-causale d'un bloc permet en effet d'ajouter les blocs suivants pour construire la prédiction des vecteurs de mouvement d'un bloc à coder : bloc droit, bloc bas droit, bloc bas et bloc bas gauche.

Une information supplémentaire doit être codée dans le flux afin d'indiquer quels blocs ont été utilisés pour la prédiction des vecteurs de mouvement. Cette information peut être insérée à l'aide du codage d'un index. L'index représente le vecteur prédicteur utilisé pour prédire le mouvement du bloc à coder, parmi un ensemble de vecteurs prédicteurs défini au préalable.

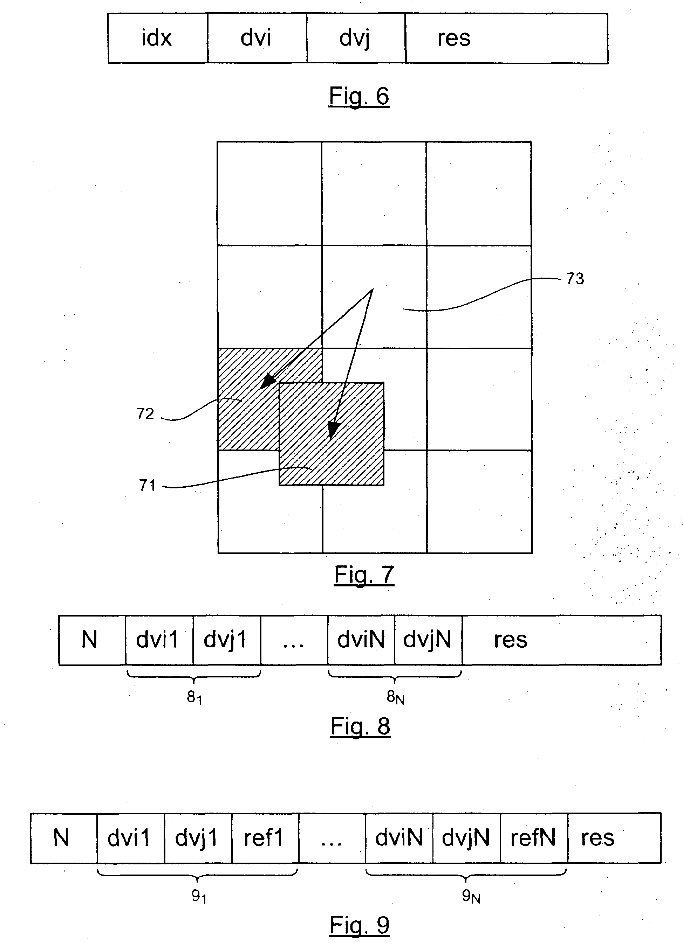

Cet ensemble est adaptatif pour chaque bloc. Il contient un nombre N de vecteurs prédicteurs. Il peut contenir les vecteurs du voisinage causal et du voisinage non-causal du bloc à coder, le vecteur médian, le vecteur d'un bloc co-localisé dans une autre image. La figure 6 illustre la syntaxe associée à ce mode.

Pour un bloc codé en mode inter, les données d'un bloc comprennent :

- un index idx indiquant le vecteur prédicteur utilisé ;
- les résidus du vecteur de mouvement dvi et dvj ; et
- le résidu res de la texture de bloc.

6.2.3 prédiction intra déplacée

L'invention permet également d'étendre le mode de prédiction intra déplacée de la norme H.264/AVC, en autorisant l'utilisation de blocs reconstruits dans la zone non causale. La signalisation à l'aide d'un vecteur de mouvement ne change pas.

De plus, cette prédiction d'un bloc à l'aide d'un vecteur peut être calculée à partir de plus d'un bloc venant de la même direction ou d'une autre direction. Ainsi, il est possible de définir une prédiction multi-dimensionnelle.

La prédiction (le bloc prédit) Pred associée à un bloc courant B est alors calculée par la somme pondérée des blocs des différents directions utilisées: pour les pixels (i,j) du bloc B, la prédiction est alors :

$$\mathrm{Pr}\,ed(i,\,j) = \sum_{n<N} w_n Itn\ (i + vi_n,\,j + vj_n)$$

avec : N le nombre de blocs référence utilisés pour la prédiction de B,

$(vi_n, vj_n)$ un vecteur indiquant le déplacement à appliquer au bloc B dans l'image Itn pour retrouver le bloc de référence dans l'image Itn,

wn un poids pondérant la participation du bloc de référence.

Selon une première approche, tous les blocs de référence peuvent participer de manière égale dans le calcul de la prédiction globale. Les poids sont alors de 1/N.

Selon une autre approche, les blocs peuvent participer dans le calcul de la prédiction globale avec un poids inversement proportionnel à la distance séparant le bloc de référence et le bloc à coder.

L'image Itn peut être l'image à coder ou une autre image.

De la même manière qu'avec la prédiction temporelle, le bloc de référence indiqué par le vecteur (vin,vjn) peut être un bloc de pixels non alignés avec la grille de découpage de l'image en blocs. Le bloc de référence utilisé est alors la zone de pixels de la même taille que le bloc à coder et dont l'origine est donnée par l'origine du bloc à coder à laquelle on ajoute le vecteur.

Ainsi, un bloc de référence 71 peut être à cheval sur plusieurs blocs dé la grille, comme illustré sur la figure 7. Cette figure 7 illustre par ailleurs la prise en compte de deux blocs de référence 71 et 72 pour la prédiction du bloc 73, comme décrit ci-dessus.

De la même manière, si le vecteur est un vecteur sous-pixellique, la zone pointée par le vecteur doit être sur-échantillonnée afin de reconstruire les positions sous-pixelliques du bloc de référence.

Cette étape est similaire à la prédiction temporelle à l'aide d'un vecteur mouvement à la précision sous-pixellique d'un codeur H.264/AVC, si ce n'est que cette prédiction est faite dans l'image courante à coder.

Dans ce mode de prédiction intra déplacée étendue, les informations à coder sont les suivantes:

- le nombre de blocs référence utilisés pour la prédiction ;
- pour chaque bloc de référence, la direction de prédiction: le vecteur de mouvement ;
- pour chaque bloc de référence, l'image utilisée pour la prédiction (l'image à coder elle-même ou une autre image dans le cas d'une prédiction temporelle).

On peut distinguer ici le cas des images intra et inter. Les images intra ne sont codées que par rapport à elle-même, alors que les images inter sont codées par rapport à une ou plusieurs autres images et/ou par rapport à elle-même.

La syntaxe de codage d'un bloc d'une image intra codé en mode intra déplacé est illustrée par la figure 8.

Les données codées sont les suivantes :

- le nombre de blocs référence utilisés : N ;
- pour chaque bloc de référence $81_1$ à $81_N$, le résidu de vecteur de mouvement: dvi,dvj. Le vecteur peut être codé par prédiction par rapport aux vecteurs de blocs déjà codés, situés dans la zone causale du bloc à coder. Dans ce cas, seul le résidu est codé dans l'entête ;
- les coefficients transformés et quantifiés du résidu du bloc : res.

Une image inter peut contenir des blocs :

- inter : codés par prédiction par rapport à une ou plusieurs images codées-décodées de la séquence ; ou
- intra : codés par prédiction par rapport à des blocs de l'image à coder.

La syntaxe des blocs intra en mode intra déplacée est la même que celle proposée par l'invention pour les blocs d'une image intra.

La syntaxe des blocs inter est modifiée afin d'ajouter la possibilité de prédire le bloc inter par rapport à un bloc de l'image à coder en plus du ou des blocs d'une ou d'autres images, par exemple sous la forme illustrée en figure 9.

Pour chaque bloc, l'entête du bloc indique :

- le nombre de blocs référence utilisés: N ;
- pour chaque bloc de référence $91_1$ à $91_N$, le résidu de vecteur de mouvement : dvi, dvj ;
- pour chaque bloc de référence $91_1$ à $91_N$, l'index de l'image à laquelle appartient le bloc : ref.

Le vecteur est codé par prédiction par rapport aux vecteurs de blocs déjà codés, situés dans la zone causale du bloc à coder. Seul le résidu est codé dans l'entête.

Dans le mode de réalisation particulier décrit ici, le reste de l'entête du bloc ne change pas par rapport à la syntaxe du codeur H.264/AVC. De même, le reste des données du bloc ne change pas, il correspond aux coefficients transformés et quantifiés du résidu du bloc.

Pour une image inter, comme pour une image intra, le nombre N de blocs de référence utilisés pour la prédiction peut être limité à 1, 2 ou 3. Cette limitation peut être indiquée dans l'entête des données de l'image, en codant Nmax le nombre maximal possible commun à tous les blocs.

Afin d'optimiser le codage des informations dans l'entête, dans le cas où N est limité, le type de codage des blocs peut-être modifié en indiquant, outre le type intra ou inter, le nombre de blocs de référence utilisables pour une prédiction.

Par exemple, les modes de codage peuvent alors être : INTRA-1REF, INTRA-2REF, INTER-1REF, INTER-2REF, ces modes indiquent le type intra ou inter du bloc et le nombre de blocs référence utilisés. Ils s'ajoutent aux modes INTRA/INTER du codeur H.264/AVC. Ils se déclinent de la même manière pour les différents partitionnements en sous-blocs que les anciens modes.

Dans cette variante, la syntaxe des blocs intra et inter ne comprend plus le champ N. Sa valeur est déduite du mode de codage.

*6.3 Arbre de dépendances d'un bloc*

Un arbre de dépendances peut être établi pour un bloc courant à partir des blocs de référence identifiés pour sa prédiction. Le décodage d'un bloc sera récursif, car si le bloc utilise des blocs non encore reconstruits, il faudra d'abord reconstruire ces blocs, en établissant pour chacun son arbre de dépendances.

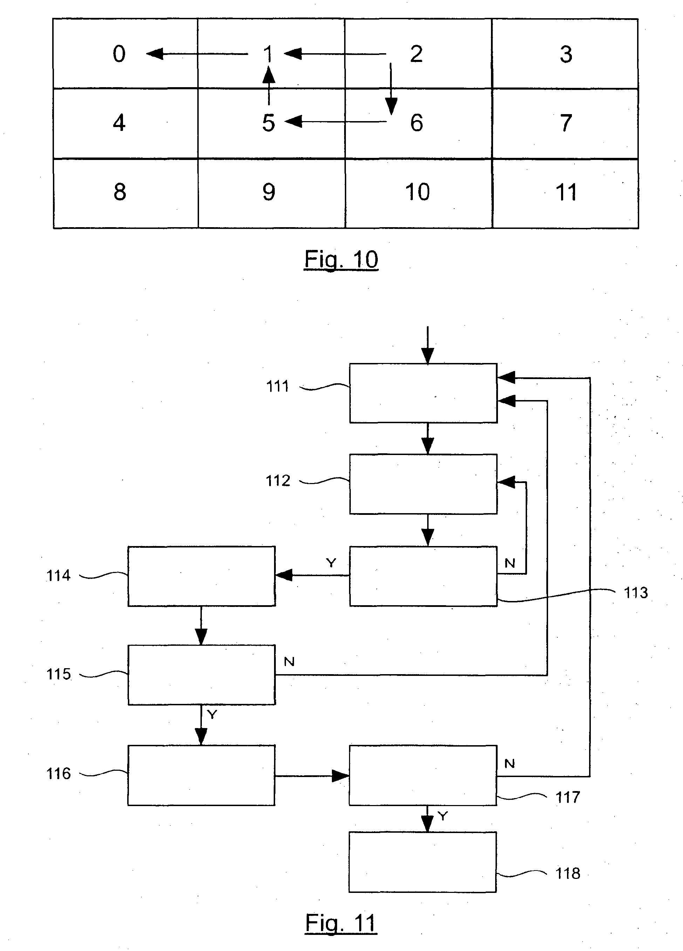

La figure 10 illustre un exemple de dépendances entre blocs. L'arbre de dépendances du bloc 2 est donné par :

- 2 dépend de 1 et de 6,
- 6 dépend de 5,
- 5 dépend de 1,
- 1 dépend de 0.

Le bloc 0 ne dépend d'aucun bloc de l'image. Il est codé par rapport à une prédiction nulle, ou par rapport à une prédiction temporelle uniquement.

Ensuite, l'arbre de dépendance est remonté : le bloc 0 est reconstruit, puis le bloc 1, puis le 5 et le 6 et enfin le bloc 2.

Cet exemple illustre le mécanisme de dépendance entre les blocs, qui se complexifie par l'addition des prédictions à partir de blocs de référence situés dans la zone anti-causale du bloc courant.

On constate ici que, comme indiqué précédemment, le décodage suivant l'ordre de lecture des blocs n'est plus possible.

*6.4 exemple de mise en ouvre du codage*

Le codage des macroblocs (ou des blocs) peut se faire par mise en compétition de plusieurs modes de codage possibles pour chaque macrobloc. Pour chaque macrobloc courant, une liste des prédictions possibles est établie en fonction des macroblocs voisins (spatiaux et temporels) déjà codés pour ce macrobloc courant. La prédiction répondant à un critère de performance prédéterminé, par exemple le meilleur compromis débit-distorsion pour le macrobloc ou bloc est choisie.

Il est également possible de fixer un seuil pour ce critère, et de sélectionner la première prédiction rencontrée respectant ce seuil.

Comme déjà expliqué, un sens de parcours classique (sens de parcours de l'image de haut en bas de la figure 2 par exemple) ne permet pas de bénéficier de tous les sens de prédiction définis plus haut. Le codage proposé ici met en oeuvre plusieurs passes de codage, pour lesquelles un sens de parcours distinct est défini. Les sens de parcours des blocs de chaque passe de codage sont donc différents.

Les macroblocs ou blocs sont codés par groupe spatialement. On considère M blocs voisins à coder dans l'image, formant un groupe de macroblocs ou de blocs. Ces groupes peuvent être faits de manière aléatoire ou issus d'une phase d'analyse.

Chaque groupe est codé de façon différente à chaque passe de codage, un nombre prédéterminé de fois ou jusqu'à atteindre un critère de débit ou de distorsion défini pour le groupe.

Le premier bloc du groupe est tout d'abord codé, classiquement. Si le groupe de blocs considéré est le premier groupe, le bloc est codé sans prédiction par rapport à ses voisins spatiaux. Sinon, le bloc peut être codé en utilisant une prédiction par rapport à ses voisins déjà codés d'un autre groupe. Dans le cas d'une image inter, une prédiction temporelle classique est également possible.

Puis les autres macroblocs du groupe sont codés. Lorsque tous les blocs du groupe sont codés, le coût débit distorsion de codage du groupe est calculé en additionnant tous les coûts débit distorsion des blocs du groupe.

Plusieurs passes de codage sont faites pour coder le groupe. Chaque passe code les blocs du groupe suivant un nouvel ordre de codage.

Le coût débit-distorsion de la passe de codage le plus faible est conservé et les blocs sont codés à l'aide des prédictions définies lors de cette passe de codage.

L'algorithme de codage passe ensuite au groupe suivant, jusqu'à ce que tous les groupes de blocs aient été codés.

Puis, les blocs codés sont transmis et/ou stockées selon l'ordre d'écriture des blocs.

La figure 11 présente de façon simplifiée un exemple de codage d'un groupe. On sélectionne (111) un ordre, ou sens de parcours. Pour le premier parcours, il peut s'agir de l'ordre de parcours de codage habituel, qui sera utilisé pour la construction du signal à transmettre, et pour la lecture des informations des blocs au décodage.

On code (112) un bloc du groupe en cours de codage, en commençant par le premier selon l'ordre de parcours sélectionné. Tant que tous les blocs du groupe n'ont pas été codés (test 113), on code (112) un nouveau bloc, selon l'ordre de parcours sélectionné, et en tenant compte, pour la prédiction, des blocs déjà codés.

Lorsque tous les blocs du groupe ont été codés, on sauvegarde les données de codage, et on détermine un compromis débit-distorsion (114).

Si le nombre de passes prévu n'est pas atteint (115), et/ou si un seuil de débit-distorsion n'a pas été atteint, on reboucle sur l'étape 111, pour sélectionner un nouvel ordre de parcours. Il peut par exemple s'agir d'un parcours en spirale, ou d'un parcours quelconque, avec un point de départ quelconque dans le groupe.

Les étapes 112 à 115 sont répétées pour ce nouvel ordre de parcours. Dans l'étape 114, on peut choisir de ne conserver que les données correspondant à la passe la plus efficace.

Lorsque le nombre de passes prévu est atteint (test 115), et/ou si un seuil de débit-distorsion a été atteint, on conserve (116), pour transmission et/ou stockage, les informations de chaque bloc selon l'ordre correspondant à la passe la plus efficace. Si le groupe de blocs qui a été traité est le dernier (test 117), le codage des blocs est terminé (118), et on construit le flux, ou signal, à transmettre et/ou à stocker, selon l'ordre de parcours des blocs dans l'image ou selon l'ordre d'écriture des blocs (et non selon l'ordre de parcours de codage de la passé sélectionnée pour un bloc).

Si le groupe de blocs qui a été traité n'est pas le dernier (test 117), on reboucle sur l'étape 111, en réinitialisant le comptage des passes.

6.5 décodage

*6.5.1 premier mode de réalisation d'un décodage du flux*

Le décodage comprend deux grandes phases : la lecture des informations associées aux blocs, la reconstruction des blocs.

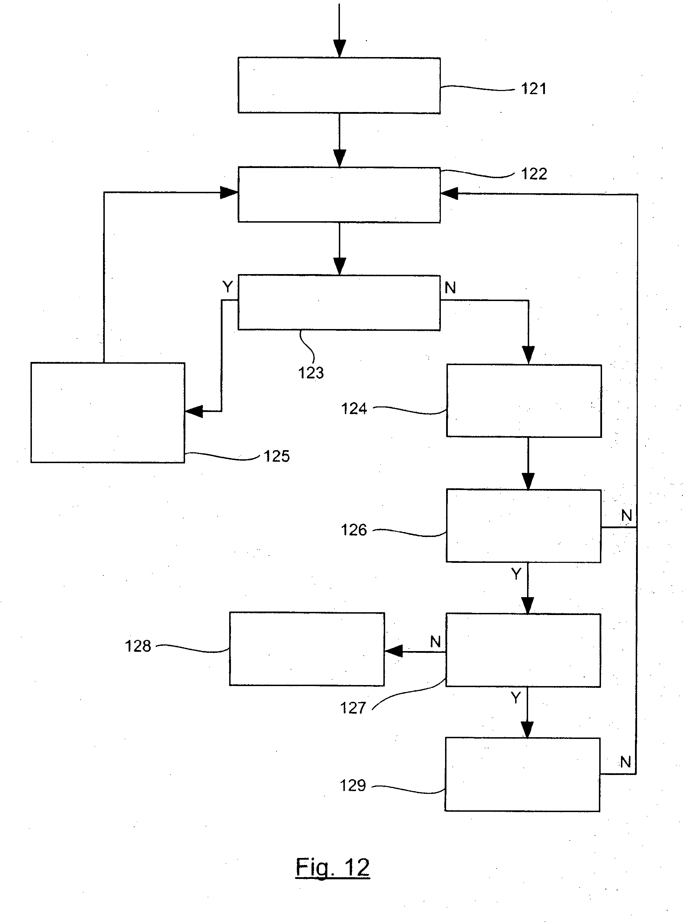

Selon un premier mode de réalisation, illustré par le schéma de la figure 12, tous les macroblocs de l'image codée sont lus successivement, selon l'ordre d'écriture des blocs dans le flux (c'est-à-dire l'ordre dans lequel les blocs sont écrits dans le flux, ou signal, reçu et leurs informations sauvegardées).

La reconstruction des blocs utilise une pile dans laquelle tous les macroblocs à reconstruire sont empilés.

Comme illustré par la figure 12, la pile est tout d'abord initialisée (121) avec le premier macrobloc qui a été lu.

Une lecture 122 des informations associées au premier macrobloc de la pile permet de déterminer (123) si la reconstruction de ce macrobloc nécessite d'abord la reconstruction de macroblocs de référence situés dans l'image. Les macroblocs de référence sont les macroblocs utilisés par la prédiction du macrobloc courant.

Si le macrobloc courant n'utilise pas de prédiction, ou si la prédiction n'utilise que des macroblocs déjà reconstruits, alors le macrobloc courant peut être reconstruit (124).

Si le macrobloc courant nécessite une prédiction qui utilise des macroblocs non encore reconstruits, ces macroblocs de référence sont empilés (125) dans la pile. L'algorithme revient ensuite à l'étape 122.

Lorsqu'un macrobloc est décodé (124), l'algorithme vérifie (126) si la pile est vide.

Si cette pile est vide, l'algorithme vérifie (127) si tous les macroblocs de l'image ont été reconstruits. Si oui, le décodage des macroblocs de l'image est terminé (128). Si non, le prochain macrobloc non décodé dans le sens de parcours de l'image est mis dans la pile (129) et l'algorithme revient à l'étape 122.

Si la pile n'est pas vide (test 126), l'algorithme revient à l'étape 122.

Cet algorithme de décodage permet de décoder tous les macroblocs de l'image en tenant compte de leur dépendance.

*6.5.2 deuxième mode de réalisation d'un décodage du flux*

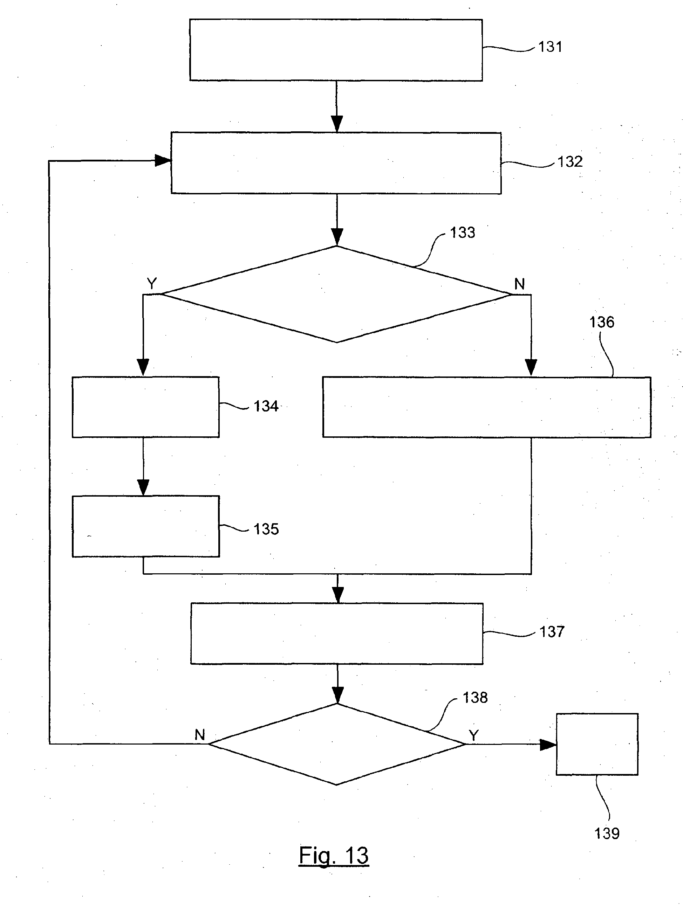

Selon un deuxième mode de réalisation, illustré par la figure 13, le procédé de décodage met en oeuvre une liste triée d'attente de blocs, avec une priorisation des blocs selon l'indice du bloc d'indice maximal.

Le procédé débute donc par une étape d'initialisation 131 de cette liste à une liste vide.

On parcourt ensuite les blocs selon l'ordre de parcours des blocs dans l'image (par exemple selon les désignations usuelles, en anglais : « raster scan », « spiral scan », « rain scan order », ...) :

- identification 132 des dépendances du bloc courant, en fonction de l'arbre de dépendances qui lui est associé ;
- pour le bloc courant, selon le mode de codage et de prédictions associées, détermination 133 du statut décodable immédiatement ou non ;

  - si le bloc est décodable :

    - décodage 134 ; et
    - dépilage 135 des blocs décodables dans la pile d'attente;

  - si le bloc n'est pas décodable :

    - 136 : ajout du bloc dans la liste d'attente ;

  - passage 137 au bloc suivant ;

- si le dernier bloc est traité (138), fin 139 du traitement, sinon, retour à l'étape 132.

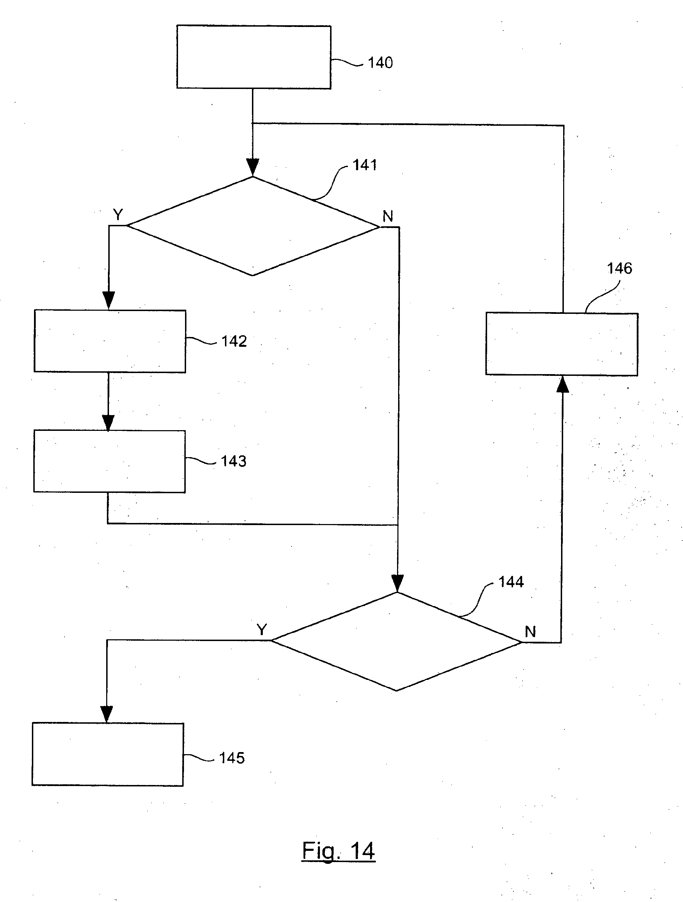

Le dépilage 135 des blocs décodables est illustré de façon plus détaillée par la figure 14. Le processus est le suivant :

- parcours 140 de tous les blocs de la liste d'attente ;
- si le bloc courant de la liste peut être décodé (c'est-à-dire si tous les blocs dont il dépend ont déjà été décodés) 141 :

- on le retire de la file, ou pile, d'attente (142) ;
- on le décode (143) ;
- si tous les blocs ont été pris en compte (fin de parcours) 144 :

    - fin du traitement de la liste d'attente (145) ;

- sinon, on passe au bloc suivant (146) et on reprend le traitement à l'étape 141.

Ce processus de dépilage est par ailleurs itéré tant que la liste d'attente est non vide et que l'opération de dépilage a retiré au moins un élément de la liste d'attente.

**Revendications**

1. Procédé de codage de données d'images, une image étant découpée en blocs, ledit procédé mettant en oeuvre les étapes de :

    - prédiction des données d'un bloc courant ($41_5$) en fonction d'au moins un bloc déjà codé ($41_1$ à $41_4$ et $41_6$ à $41_9$), dit bloc de référence, délivrant un bloc prédit ;
    - détermination d'informations de résidus (dvi, dvj), par comparaison dudit bloc courant et dudit bloc prédit ;
    - codage desdites informations de résidus ;
    - transmission et/ou stockage d'un signal de données comprenant un ensemble de données associées à chaque bloc, comprenant lesdites informations de résidus, selon un ordre prédéterminé de parcours d'écriture des données associées aux blocs codés dans ledit signal,

    **caractérisé en ce que** ladite étape de prédiction tient compte d'un ensemble de blocs codés voisins dudit bloc courant, comprenant des blocs non encore considérés selon ledit ordre de parcours d'écriture, et **en ce qu'**il comprend les étapes de :

    - construction d'un arbre de dépendance, associant à un bloc courant au moins un bloc de référence à partir duquel le bloc prédit associé audit bloc courant a été prédéterminé ;
    - insertion d'informations représentatives dudit arbre de dépendance dans ledit ensemble de données associées à chaque bloc.

2. Procédé de codage selon la revendication 1, **caractérisé en ce que** ladite étape de prédiction comprend au moins deux passes de prédiction, pour au moins un desdits blocs source, selon des ordres de parcours de prédiction distincts, et **en ce qu'**il comprend une étape de sélection (111) de l'un desdits ordres de parcours de prédiction, selon un critère d'efficacité prédéterminé.

3. Dispositif de codage de données d'images, une image étant découpée en blocs source, ledit dispositif comprenant :

    - des moyens de prédiction des données d'un bloc courant ($41_5$) en fonction d'au moins un autre bloc déjà codé ($41_1$ à $41_4$ et $41_6$ à $41_9$), dit bloc de référence, délivrant un bloc prédit ;
    - des moyens de détermination d'informations de résidus, par comparaison dudit bloc courant et dudit bloc prédit ;
    - des moyens de codage desdites informations de résidus,
    - des moyens de transmission et/ou stockage d'un signal de données comprenant un ensemble de données associées à chaque bloc, comprenant lesdites informations de résidus, selon un ordre prédéterminé de parcours d'écriture des données associées aux blocs codés dans ledit signal,

    **caractérisé en ce que** lesdits moyens de prédiction tiennent compte d'un ensemble de blocs codés voisins dudit bloc courant, comprenant des blocs non encore considérés selon ledit ordre de parcours d'écriture, et **en ce que** ledit dispositif comprend :

    - des moyens de construction d'un arbre de dépendance, associant à un bloc courant au moins un bloc de référence à partir duquel le bloc prédit associé audit bloc courant a été prédéterminé ;
    - des moyens d'insertion d'informations représentatives dudit arbre de dépendance dans ledit ensemble de données associées à chaque bloc.

4. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution des étapes du procédé de codage selon l'une au moins des revendications 1 et 2, lorsqu'il est exécuté sur un ordinateur.

5. Signal de données d'images codé selon le procédé de codage de l'une quelconque des revendications 1 et 2, selon lequel, une image étant découpée en blocs source, on met en oeuvre au moins une passe de prédiction, **caractérisé en ce qu'**il comprend, pour un bloc courant ($41_5$), un ensemble de données comprenant :

    - des données représentatives d'un arbre de dépendance, associant audit bloc courant au moins un bloc de référence à partir duquel le bloc prédit associé audit bloc courant a été prédéterminé ;
- des informations de résidus (dvi, dvj), correspondant à une différence entre ledit bloc courant et le bloc prédit correspondant.

6. Signal selon la revendication 5, **caractérisé en ce que** lesdites données représentatives d'un arbre de dépendance comprennent une information précisant le nombre (N) de blocs de référence pris en compte pour ledit bloc courant et, pour chaque bloc de référence, des données de définition d'un vecteur reliant ledit bloc de référence et ledit bloc courant.

7. Support de données comprenant au moins un signal de données d'images codé selon le procédé de codage de l'une quelconque des revendications 1 et 2, selon lequel, une image étant découpée en blocs source, on met en oeuvre au moins une passe de prédiction, **caractérisé en ce qu'**il comprend, pour un bloc courant (41₅), un ensemble de données comprenant :

- des données représentatives d'un arbre de dépendance, associant audit bloc courant au moins un bloc de référence à partir duquel le bloc prédit associé audit bloc courant a été prédéterminé ;
- des informations de résidus (dvi, dvj), correspondant à une différence entre ledit bloc courant et le bloc prédit correspondant.

8. Procédé de décodage d'un signal de données d'images, une image étant découpée en blocs, et ledit signal comprenant une série d'ensembles de données associés chacun à un desdits blocs, selon ledit ordre de parcours d'écriture, lesdits ensembles de données étant lus selon ledit ordre de parcours d'écriture, **caractérisé en ce que** le décodage d'au moins un desdits blocs est effectué selon un ordre de décodage distinct dudit ordre de parcours d'écriture, et **en ce que** le procédé comprend les étapes suivantes, pour un bloc courant :

- extraction, dans ledit ensemble de données, d'informations représentatives, d'un arbre de dépendance, associant à un bloc courant au moins un bloc de référence à partir duquel le bloc prédit associé audit bloc courant a été prédéterminé ;
- décodage (134, 143) dudit bloc, lorsque le ou les blocs de référence identifiés dans ledit arbre de dépendance ont déjà été décodés, comprenant les sous-étapes suivantes :

- prédiction d'un bloc prédit, à partir du ou desdits blocs de référence ;

- reconstruction (124) d'un bloc décodé, à partir dudit bloc prédit et en fonction d'informations de résidus présentes dans ledit ensemble de données.

9. Procédé de décodage selon la revendication 8, **caractérisé en ce qu'**il comprend les étapes suivantes, pour un bloc courant :

- si le ou les blocs de référence identifiés dans ledit arbre de dépendance ont déjà été décodés, décodage (134, 143) immédiat dudit bloc courant ;
- sinon, insertion (136) de l'ensemble de données dudit bloc courant dans une pile d'attente (129) ;
- traitement du bloc suivant, selon ledit ordre de parcours d'écriture.

10. Procédé de décodage selon la revendication 9, **caractérisé en ce qu'**il comprend une étape de mémorisation des blocs de référence nécessaires pour décoder un bloc en attente, et **en ce que** ledit bloc en attente est décodé (143) dès que tous lesdits blocs de référence nécessaires sont disponibles.

11. Procédé de décodage selon la revendication 9, **caractérisé en ce que** le décodage est effectué par passes successives selon ledit ordre de parcours d'écriture, un bloc courant étant décodé au cours d'une desdites passes si tous lesdits blocs de référence nécessaires sont disponibles.

12. Procédé de décodage selon la revendication 8, **caractérisé en ce que**, pour au moins un bloc courant (73), ladite sous-étape de prédiction tient compte d'au moins deux blocs de référence (71,72), une valeur de pondération étant affectée à chacun desdits blocs de référence.

13. Procédé de décodage selon la revendication 8, **caractérisé en ce que**, pour au moins un bloc courant (73), ladite sous-étape de prédiction tient compte d'au moins un bloc de référence (71) chevauchant au moins deux blocs source.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution des étapes du procédé de décodage selon l'une au moins des revendications 8 à 13, lorsqu'il est exécuté sur un ordinateur.

15. Dispositif de décodage d'un signal de données d'images, une image étant découpée en blocs, et ledit signal comprenant une série d'ensembles de données associés chacun à un desdits blocs, selon ledit ordre de parcours d'écriture,

lesdits ensembles de données étant lus selon ledit ordre de parcours d'écriture, **caractérisé en ce que** ledit dispositif met en oeuvre des moyens de décodage assurant, pour au moins un desdits blocs, un décodage selon un ordre de décodage distinct dudit ordre de parcours d'écriture,

et **en ce qu'**il comprend, pour le décodage d'un bloc courant :

- des moyens d'extraction, dans ledit ensemble de données, d'informations représentatives d'un arbre de dépendance, associant à un bloc courant au moins un bloc de référence à partir duquel le bloc prédit associé audit bloc courant a été prédéterminé ;
- des moyens de décodage (134, 143) dudit bloc, en fonction d'informations de résidus présentes dans ledit ensemble de données, lorsque le ou les blocs de référence identifiés dans ledit arbre de dépendance ont déjà été décodés.

**Patentansprüche**

1. Verfahren zum Kodieren von Bilddaten, wobei ein Bild in Blöcke unterteilt ist, wobei das Verfahren die folgenden Schritte einsetzt:

- Vorhersage der Daten eines laufenden Blocks ($41_5$) in Abhängigkeit von mindestens einem bereits kodierten Block ($41_1$ bis $41_4$ und $41_6$ bis $41_9$), dem so genannten Referenzblock, der einen vorhergesagten Block ausgibt;
- Bestimmen von Rückstandsinformationen (dvi, dvj) durch Vergleich des laufenden Blocks und des vorhergesagten Blocks;
- Kodierung der Rückstandsinformationen;
- Übertragung und/oder Speicherung eines Datensignals, das einen Datensatz umfasst, der mit jedem Block verbunden ist, der die Rückstandsinformationen in einer vorgegebenen Reihenfolge von Schreibdurchläufen der mit den Blöcken, die in dem Signal kodiert sind, verknüpften Daten aufweist,

**dadurch gekennzeichnet, dass** der Schritt der Vorhersage einen Satz von kodierten Blöcken berücksichtigt, die sich in der Nähe des laufenden Blocks befinden, Blöcke umfassend, die gemäß der Reihenfolge der Schreibdurchläufe noch nicht berücksichtigt wurden,
und dadurch, dass er folgende Schritte umfasst:

- Errichten eines Abhängigkeitsbaums, wobei mindestens ein Referenzblock, anhand dessen der vorhergesagte Block, der mit dem laufenden Block verknüpft ist, vorherbestimmt wurde, mit einem laufenden Block verknüpft wird;
- Einfügen von Informationen, die für den Abhängigkeitsbaum repräsentativ sind, in den Datensatz, der mit jedem Block verknüpft ist.

2. Kodierungsverfahren nach Anspruch 1, **dadurch gekennzeichnet, dass** der Schritt der Vorhersage für mindestens einen der Quellblöcke mindestens zwei Vorhersagedurchläufe gemäß unterschiedlichen Reihenfolgen der Vorhersagedurchläufe umfasst,
und dadurch, dass es einen Schritt der Auswahl (111) einer der Reihenfolgen der Vorhersagedurchläufe gemäß einem vorherbestimmten Leistungskriterium umfasst.

3. Vorrichtung zur Kodierung von Bilddaten, wobei ein Bild in Quellblöcke unterteilt ist, wobei die Vorrichtung umfasst:

- Mittel zur Vorhersage der Daten eines laufenden Blocks ($41_5$) in Abhängigkeit von mindestens einem anderen, bereits kodierten Block ($41_1$ bis $41_4$ und $41_6$ bis $41_9$), dem so genannten Referenzblock, der einen vorhergesagten Block ausgibt;
- Mittel zum Bestimmen von Rückstandsinformationen durch Vergleich des laufenden Blocks und des vorhergesagten Blocks;
- Mittel zum Kodieren der Rückstandsinformationen,
- Mittel zur Übertragung und/oder Speicherung eines Datensignals, das einen Datensatz umfasst, der mit jedem Block verbunden ist, der die Rückstandsinformationen in einer vorgegebenen Reihenfolge von Schreibdurchläufen der mit den Blöcken, die in dem Signal kodiert sind, verknüpften Daten aufweist,

**dadurch gekennzeichnet, dass** die Vorhersagemittel eine Gesamtheit von kodierten Blöcken berücksichtigen, die sich in der Nähe des laufenden Blocks befinden, die Blöcke umfassen, die gemäß der Reihenfolge der Schreibdurchläufe noch nicht berücksichtigt wurden,
und dadurch, dass die Vorrichtung umfasst:

- Mittel zum Errichten eines Abhängigkeitsbaums, wobei mindestens ein Referenzblock, anhand dessen der vorhergesagte Block, der mit dem laufenden Block verknüpft ist, vorherbestimmt wurde, mit einem laufenden Block verknüpft wird;
- Mittel zum Einfügen von Informationen, die für den Abhängigkeitsbaum repräsentativ sind, in den Datensatz, der mit jedem Block verknüpft ist.

**4.** Computerprogrammprodukt, das von einem Kommunikationsnetz heruntergeladen werden kann und/oder auf einem computerlesbaren Träger gespeichert ist und/oder von einem Mikroprozessor ausführbar ist, **dadurch gekennzeichnet, dass** es Programmcodeanweisungen für die Ausführung der Schritte des Kodierungsverfahrens gemäß mindestens einem der Ansprüche 1 und 2 umfasst, wenn es auf einem Computer ausgeführt wird.

**5.** Signal von Bilddaten, das gemäß dem Kodierungsverfahren nach einem der Ansprüche 1 und 2 kodiert ist, gemäß dem, wenn ein Bild in Quellblöcke unterteilt ist, mindestens ein Vorhersagevorgang erfolgt, **dadurch gekennzeichnet, dass** es bei einem laufenden Block ($41_5$) einen Datensatz aufweist, umfassend

    - Daten, die repräsentativ sind für einen Abhängigkeitsbaum, wobei mindestens ein Referenzblock, anhand dessen der vorhergesagte Block, der mit dem laufenden Block verknüpft ist, vorherbestimmt wurde, mit dem laufenden Block verknüpft wird;
    - Rückstandsinformationen (dvi, dvj), die einem Unterschied zwischen dem laufenden Block und dem entsprechenden vorhergesagten Block entsprechen.

**6.** Signal nach Anspruch 5, **dadurch gekennzeichnet, dass** die Daten, die für einen Abhängigkeitsbaum repräsentativ sind, eine Information aufweisen, die die Anzahl (N) der für den laufenden Block berücksichtigten Referenzblöcke und für jeden Referenzblock Daten zur Definition eines Vektors, der den Referenzblock und den laufenden Block verbindet, angibt.

**7.** Datenträger, der mindestens ein Bilddatensignal aufweist, das gemäß dem Kodierungsverfahren nach einem der Ansprüche 1 und 2 kodiert ist, gemäß dem, wenn ein Bild in Quellblöcke unterteilt ist, mindestens ein Vorhersagevorgang durchgeführt wird, **dadurch gekennzeichnet, dass** er bei einem laufenden Block ($41_5$) einen Datensatz aufweist, umfassend:

    - Daten, die repräsentativ sind für einen Abhängigkeitsbaum, wobei mindestens ein Referenzblock, anhand dessen der vorhergesagte Block, der mit dem laufenden Block verknüpft ist, vorherbestimmt wurde, mit dem laufenden Block verknüpft wird;
    - Rückstandsinformationen (dvi, dvj), die einem Unterschied zwischen dem laufenden Block und dem entsprechenden vorhergesagten Block entsprechen.

**8.** Verfahren zur Dekodierung eines Bilddatensignals, wobei ein Bild in Blöcke unterteilt ist und das Signal eine Reihe von Datensätzen aufweist, die jeweils mit einem der Blöcke verknüpft sind, gemäß der Reihenfolge der Schreibdurchläufe, wobei die Datensätze gemäß der Reihenfolge der Schreibdurchläufe gelesen werden,
**dadurch gekennzeichnet, dass** die Dekodierung von mindestens einem der Blöcke gemäß einer anderen Dekodierungsreihenfolge als der Reihenfolge der Schreibdurchläufe erfolgt,
und dadurch, dass das Verfahren für einen laufenden Block die folgenden Schritte umfasst:

    - Entnahme von Informationen, die für einen Abhängigkeitsbaum repräsentativ sind, aus dem Datensatz, wobei mindestens ein Referenzblock, anhand dessen der vorhergesagte Block, der mit dem laufenden Block verknüpft ist, vorherbestimmt wurde, mit einem laufenden Block verknüpft wird;
    - Dekodierung (134, 143) des Blocks, wenn der Referenzblock oder die Referenzblöcke, die in dem Abhängigkeitsbaum erkannt wurden, bereits dekodiert wurden, umfassend die folgenden Unterschritte:

       - Vorhersage eines vorhergesagten Blocks anhand des oder der Referenzblöcke;
       - Wiederherstellung (124) eines dekodierten Blocks anhand des vorhergesagten Blocks und auf Basis von Rückstandsinformationen, die in dem Datensatz vorhanden sind.

**9.** Dekodierungsverfahren nach Anspruch 8, **dadurch gekennzeichnet, dass** es bei einem laufenden Block die folgenden Schritte umfasst:

    - wenn der oder die Referenzblöcke, die in dem Abhängigkeitsbaum erkannt wurden, bereits dekodiert wurden, sofortige Dekodierung (134, 143) des laufenden Blocks;
    - andernfalls Einreihung (136) des Datensatzes des laufenden Blocks in eine Warteschlange (129);
    - Behandlung des folgenden Blocks gemäß der Reihenfolge der Schreibdurchläufe.

**10.** Dekodierungsverfahren nach Anspruch 9, **dadurch gekennzeichnet, dass** es einen Schritt der Speicherung der Referenzblöcke umfasst, die erforderlich sind, um einen wartenden Block zu dekodieren, und dadurch, dass der wartende Block dekodiert (143) wird, sobald alle erforderlichen Referenzblöcke zur Verfügung stehen.

**11.** Dekodierungsverfahren nach Anspruch 9, **dadurch**

gekennzeichnet, dass die Dekodierung in aufeinanderfolgenden Durchläufen gemäß der Reihenfolge der Schreibdurchläufe erfolgt, wobei ein laufender Block während einer der Durchläufe dekodiert wird, falls alle erforderlichen Referenzblöcke zur Verfügung stehen.

12. Dekodierungsverfahren nach Anspruch 8, **dadurch gekennzeichnet, dass** für mindestens einen laufenden Block (73) der Unterschritt der Vorhersage mindestens zwei Referenzblöcke (71, 72) berücksichtigt, wobei jedem der Referenzblöcke ein Gewichtungswert zugeordnet wird.

13. Dekodierungsverfahren nach Anspruch 8, **dadurch gekennzeichnet, dass** für mindestens einen laufenden Block (73) der Unterschritt der Vorhersage mindestens einen Referenzblock (71) berücksichtigt, wobei mindestens zwei Quellblöcke sich überlappen.

14. Computerprogrammprodukt, das von einem Kommunikationsnetz heruntergeladen werden kann und/oder auf einem computerlesbaren Träger gespeichert ist und/oder von einem Mikroprozessor ausgeführt werden kann, **dadurch gekennzeichnet, dass** es Programmcodeanweisungen zur Ausführung der Schritte des Dekodierungsverfahrens nach mindestens einem der Ansprüche 8 bis 13 aufweist, wenn es auf einem Computer ausgeführt wird.

15. Vorrichtung zur Dekodierung eines Bilddatensignals, wobei ein Bild in Blöcke unterteilt ist und das Signal eine Reihe von Datensätzen aufweist, die jeweils mit einem der Blöcke verknüpft sind, gemäß der Reihenfolge der Schreibdurchläufe, wobei die Datensätze gemäß der Reihenfolge der Schreibdurchläufe gelesen werden, **dadurch gekennzeichnet, dass** die Vorrichtung Dekodierungsmittel verwendet, die für mindestens einen der Blöcke eine Dekodierung gemäß einer anderen Dekodierungsreihenfolge als der Reihenfolge der Schreibdurchläufe gewährleistet, und dadurch, dass sie für die Dekodierung eines laufenden Blocks umfasst:

- Mittel zur Entnahme von Informationen, die für einen Abhängigkeitsbaum repräsentativ sind, aus dem Datensatz, wobei mindestens ein Referenzblock, anhand dessen der vorhergesagte Block, der mit dem laufenden Block verknüpft ist, vorherbestimmt wurde, mit einem laufenden Block verknüpft wird;
- Mittel zur Dekodierung (134, 143) des Blocks auf Basis von Rückstandsinformationen, die in dem Datensatz vorhanden sind, wenn der oder die Referenzblöcke, die in dem Abhängigkeitsbaum erkannt wurden, bereits dekodiert wurden.

**Claims**

1. Method of coding image data, an image being cut up into blocks, the said method implementing the steps of:

- prediction of the data of a current block ($41_5$) as a function of at least one already coded block ($41_1$ to $41_4$ and $41_6$ to $41_9$), termed the reference block, delivering a predicted block;
- determination of information in respect of residuals (dvi, dvj), by comparison of the said current block and of the said predicted block;
- coding of the said information in respect of residuals;
- transmission and/or storage of a data signal comprising a set of data associated with each block, comprising the said information in respect of residuals, according to a predetermined order of traversal of writing of the data associated with the blocks coded in the said signal,

**characterized in that** the said prediction step takes account of a set of neighbour coded blocks of the said current block, comprising blocks not yet considered according to the said order of traversal of writing, and **in that** it comprises the steps of:

- construction of a dependency tree, associating with a current block at least one reference block on the basis of which the predicted block associated with the said current block was predetermined;
- insertion of information representative of the said dependency tree into the said set of data associated with each block.

2. Method of coding according to Claim 1, **characterized in that** the said prediction step comprises at least two prediction passes, for at least one of the said source blocks, according to distinct orders of traversal of prediction, and **in that** it comprises a step (111) of selecting one of the said orders of traversal of prediction, according to a predetermined effectiveness criterion.

3. Device for coding image data, an image being cut up into source blocks, the said device comprising:

- means for predicting the data of a current block ($41_5$) as a function of at least one other already coded block ($41_1$ to $41_4$ and $41_6$ to $41_9$), termed the reference block, delivering a predicted block;
- means for determining information in respect of residuals, by comparison of the said current block and of the said predicted block;
- means for coding the said information in respect of residuals,
- means for transmitting and/or storing a data signal comprising a set of data associated with each block, comprising the said information in respect of residuals, according to a predetermined order of traversal of writing of the data associated with the blocks coded in the said signal,

**characterized in that** the said prediction means take account of a set of neighbour coded blocks of the said current block, comprising blocks not yet considered according to the said order of traversal of writing, and **in that** the said device comprises:

- means for constructing a dependency tree, associating with a current block at least one reference block on the basis of which the predicted block associated with the said current block was predetermined;
- means for inserting information representative of the said dependency tree into the said set of data associated with each block.

4. Computer program product downloadable from a communication network and/or stored on a medium readable by computer and/or executable by a microprocessor, **characterized in that** it comprises program code instructions for the execution of the steps of the method of coding according to at least one of Claims 1 and 2, when it is executed on a computer.

5. Image data signal coded according to the method of coding of either one of Claims 1 and 2, according to which, an image being cut up into source blocks, at least one prediction pass is implemented, **characterized in that** it comprises, for a current block ($41_5$), a set of data comprising:

- data representative of a dependency tree, associating with the said current block at least one reference block on the basis of which the predicted block associated with the said current block was predetermined;
- information in respect of residuals (dvi, dvj), corresponding to a difference between the said current block and the corresponding predicted block.

6. Signal according to Claim 5, **characterized in that** the said data representative of a dependency tree comprise an item of information specifying the number (N) of reference blocks taken into account for the said current block and, for each reference block, definition data in respect of a vector linking the said reference block and the said current block.

7. Data medium comprising at least one image data signal coded according to the method of coding of either one of Claims 1 and 2, according to which, an image being cut up into source blocks, at least one prediction pass is implemented, **characterized in that** it comprises, for a current block ($41_5$), a set of data comprising:

- data representative of a dependency tree, associating with the said current block at least one reference block on the basis of which the predicted block associated with the said current block was predetermined;
- information in respect of residuals (dvi, dvj), corresponding to a difference between the said current block and the corresponding predicted block.

8. Method of decoding an image data signal, an image being cut up into blocks, and the said signal comprising a series of data sets each associated with one of the said blocks, according to the said order of traversal of writing,
the said data sets being read according to the said order of traversal of writing, **characterized in that** the decoding of at least one of the said blocks is performed according to an order of decoding distinct from the said order of traversal of writing,
and **in that** the method comprises the following steps, for a current block:

- extraction, from the said set of data, of information representative of a dependency tree, associating with a current block at least one reference block on the basis of which the predicted block associated with the said current block was predetermined;
- decoding (134, 143) of the said block, when the reference block or blocks identified in the said dependency tree have already been decoded, comprising the following sub-steps:
- prediction of a predicted block, on the basis of the said reference block or blocks;
- reconstruction (124) of a decoded block, on the basis of the said predicted block and as a function of information in respect of residuals present in the said set of data.

9. Method of decoding according to Claim 8, **characterized in that** it comprises the following steps, for a current block:

- if the reference block or blocks identified in the said dependency tree have already been decoded, immediate decoding (134, 143) of the said current block;
- otherwise, insertion (136) of the set of data of the said current block into a waiting stack (129);

- processing of the following block, according to the said order of traversal of writing.

10. Method of decoding according to Claim 9, **characterized in that** it comprises a step of storing the reference blocks which are necessary for decoding a waiting block, and **in that** the said waiting block is decoded (143) as soon as all the said necessary reference blocks are available.

11. Method of decoding according to Claim 9, **characterized in that** the decoding is performed by successive passes according to the said order of traversal of writing, a current block being decoded in the course of one of the said passes if all the said necessary reference blocks are available.

12. Method of decoding according to Claim 8, **characterized in that**, for at least one current block (73), the said prediction sub-step takes account of at least two reference blocks (71, 72), a weighting value being assigned to each of the said reference blocks.

13. Method of decoding according to Claim 8, **characterized in that**, for at least one current block (73), the said prediction sub-step takes account of at least one reference block (71) overlapping at least two source blocks.

14. Computer program product downloadable from a communication network and/or stored on a medium readable by computer and/or executable by a microprocessor, **characterized in that** it comprises program code instructions for the execution of the steps of the method of decoding according to at least one of Claims 8 to 13, when it is executed on a computer.

15. Device for decoding an image data signal, an image being cut up into blocks, and the said signal comprising a series of data sets each associated with one of the said blocks, according to the said order of traversal of writing,
the said data sets being read according to the said order of traversal of writing,
**characterized in that** the said device implements decoding means ensuring, for at least one of the said blocks, a decoding according to an order of decoding distinct from the said order of traversal of writing, and **in that** it comprises, for the decoding of a current block:

- means for extracting, from the said set of data, information representative of a dependency tree, associating with a current block at least one reference block on the basis of which the predicted block associated with the said current block was predetermined;
- means for decoding (134, 143) the said block, as a function of information in respect of residuals present in the said set of data, when the reference block or blocks identified in the said dependency tree have already been decoded.

Fig. 1

Fig. 2

Fig. 3A

Fig. 3B

Fig. 4

Fig. 5

| idx | dvi | dvj | res |
|-----|-----|-----|-----|

**Fig. 6**

**Fig. 7**

| N | dvi1 | dvj1 | ... | dviN | dvjN | res |
|---|------|------|-----|------|------|-----|

$8_1$         $8_N$

**Fig. 8**

| N | dvi1 | dvj1 | ref1 | ... | dviN | dvjN | refN | res |
|---|------|------|------|-----|------|------|------|-----|

$9_1$         $9_N$

**Fig. 9**

| 0 | 1 | 2 | 3 |
|---|---|---|---|
| 4 | 5 | 6 | 7 |
| 8 | 9 | 10 | 11 |

Fig. 10

Fig. 11

Fig. 12

Fig. 13

Fig. 14

**EP 2 304 963 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0149038 A